# EUROPÄISCHE PATENTSCHRIFT

(11) **EP 2 946 424 B1**
(45) Veröffentlichungstag und Bekanntmachung des Hinweises auf die Patenterteilung: **06.05.2020**
(21) Anmeldenummer: 13818749.7
(22) Anmeldetag: 23.12.2013
(51) Int. Cl.: H01M 2/10, H01M 2/20, H01M 10/04

(54) **AKKUMULATOREINHEIT FÜR EIN WASSERFAHRZEUG**
RECHARGEABLE BATTERY UNIT FOR A WATERCRAFT
ENSEMBLE D'ACCUMULATEURS POUR ENGIN NAUTIQUE

(30) Priorität: 18.01.2013 DE 102013100545
(43) Veröffentlichungstag der Anmeldung: 25.11.2015
(73) Patentinhaber: CAYAGO TEC GmbH, 32108 Bad Salzuflen (DE)
(72) Erfinder: WALPURGIS, Hans Peter, 6352 Ellmau (AT)
(74) Vertreter: Herrmann, Jochen
(86) Internationale Anmeldenummer: PCT/EP2013/077897
(87) Internationale Veröffentlichungsnummer: WO 2014/111233

(56) Entgegenhaltungen:
- EP-A2- 2 343 752
- DE-A1-102011 102 102
- DE-U1-202011 109 862
- US-A- 5 227 263

## Beschreibung

Die Erfindung betrifft eine Akkumulatoreinheit für ein Wasserfahrzeug mit mehreren Akkumulatoren, die über eine Halteranordnung miteinander zu einer Akkumulatorzelle verbunden sind und die mittels Polverbindern elektrisch miteinander gekoppelt sind.

Aus der DE 10 2004 049 615 B4 ist ein Wasserfahrzeug bekannt, das in einem Fahrzeugrumpf einen Strömungskanal ausbildet und in dem ein Elektromotor angeordnet ist. Der Elektromotor treibt über eine Antriebswelle einen Propeller an. Der Propeller saugt Wasser durch eine Einsaugöffnung des Strömungskanals an, beschleunigt dieses und stößt es rückseitig im Heckbereich des Rumpfs aus, so dass ein Strahlantrieb gebildet ist. Der Motor wird von einer Akkumulatoreinheit mit Strom versorgt. Der Rumpf des Wasserfahrzeugs ist so ausgebildet, dass ein Benutzer darauf, zumindest teilweise, mit seinem Oberkörper aufliegen kann. Derartige Wasserfahrzeuge eignen sich sowohl für die Überwasser- als auch die Unterwasserfahrt und können mithin als Tauchschlitten eingesetzt werden.

Aus der DE 10 2005 001 817 B4 ist eine Steuerelektronik bekannt, mit der die elektrischen Komponenten eines Wasserfahrzeugs über ein Bussystem angesteuert werden können. Insbesondere ist auch die Akkumulatoreinheit an dieses Bussystem angeschlossen.

Aus der US 5,227,263 B ist ein Wasserfahrzeug gemäß dem Oberbegriff des Anspruchs 1 bekannt. Dabei wird eine einteilige Haltevorrichtung welche zylindrische Zellen aufnimmt mittels Führungsstangen in einem Rohrabschnitt des Wasserfahrzeugs eingesetzt.

Aus der EP 2 343 752 A2 sind Batteriehalterungen bekannt, welche in Rohrabschnitte eingesetzt werden können. Diese Halterungen sind mehrteilig ausgeführt und verfügen über durchgehende Spannelemente, welche die Zellen in Module zusammenfasst.

Bei derartigen Wasserfahrzeugen besteht aufgrund der beengten Platzverhältnisse im Rumpf das Bedürfnis möglichst kleinbauende Komponenten einzusetzen. Zudem sollen diese Baueinheiten dann auch ein geringes Eigengewicht aufweisen, die den Transport des Wasserfahrzeugs außerhalb des Wassers vereinfachen. Die Akkumulatoreinheiten sollen auf möglichst kleinem Bauraum mit ausreichender Spannung eine hohe Leistungsdichte zur Verfügung stellen um hohe Motorleistungen erzeugen zu können.

Es ist Aufgabe der Erfindung eine Akkumulatoreinheit der eingangs erwähnten Art bereitzustellen, mit der eine kompakte Positionierung und Verschaltung mehrerer einzelner Akkumulatoren möglich wird. Insbesondere soll eine eine einfache Abdichtung möglich sein.

Diese Aufgabe der Erfindung wird mit einer Akkumulatoreinheit gemäß dem Anspruch 1 gelöst.

Die Akkumulatoreinheit weist erfindungsgemäß mehrere Akkumulatoren auf, die über eine Halteranordnung miteinander zu einer Akkumulatorzelle verbunden sind und die mittels Polverbindern elektrisch aneinander geschlossen sind. Die Halteranordnung weist wenigstens einen Halter auf, der Aufnahmen bildet, an denen die Akkumulatoren im Bereich eines Polendes gehalten sind.

Die Akkumulatoren können in der Halteanordnung kompakt zusammengefasst werden und bilden eine einheitlich handhabbare Akkumulatorzelle. Diese kann mit weiteren, insbesondere baugleichen Akkumulatorzellen kombiniert werden, wobei je nach Verschaltung der Akkumulatoren die Leistungsdichte und/oder die Spannung die die Zellenanordnung zur Verfügung stellt variiert werden kann.

Die erfindungsgemäße Anordnung bietet weiterhin durch die variierbare Bestückung der Aufnahmen der Halter die Möglichkeit die Leistungsdichte zu variieren.

Gemäß einer bevorzugten Erfindungsvariante kann es vorgesehen sein, dass zumindest zwei Gruppen von Akkumulatoren in einer Akkumulatorenzelle gebildet sind, die jeweils miteinander mittels der Polverbinder parallel geschalten sind.

Auch ist eine Akkumulatoreneinheit nach der Erfindung dadurch gekennzeichnet, dass die Halteanordnung zwei Halter aufweist, die mit ihren Aufnahmen jeweils die gegenüberliegenden Pole der einzelnen Akkumulatoren aufnehmen. Auf diese Weise werden die Pole im Bereich der Halter zusammengefasst und es ist eine einfache elektrische Verschaltung der Pole der einzelnen Akkumulatoren möglich.

Eine einfache Bauweise ergibt sich dann, wenn vorgesehen ist, dass die Aufnahmen als Steckaufnahmen ausgebildet sind, in denen die Enden der zylindrischen Gehäuse der Akkumulatoren eingesteckt sind. Dabei lassen sich insbesondere auch kostengünstig beziehbare standardisierte Akkumulatoren verbauen.

Gemäß einer möglichen Erfindungsausgestaltung kann es vorgesehen sein, dass der Halter Ausnehmungen oder Durchführungen aufweist, die Zugang zu den Polen der Akkumulatoren schaffen.

Wie vorstehend erwähnt, können zwei oder mehrere Akkumulatorenzellen aneinander gereiht und elektrisch miteinander gekoppelt sein. Hierbei erweist es sich als vorteilhaft, wenn der Halter mit Ausrichtelementen ausgestattet ist, an denen zwei aneinander liegende Halter zweier Akkumulatorenzellen gegeneinander ausgerichtet, insbesondere in eine Richtung formschlüssig gegeneinander gesichert sind. Auf diese Weise lässt sich eine lagesichere und stabile Zuordnung der einzelnen Akkumulatorzellen zueinander erreichen.

Bei einer aneinander gereihten Anordnung mehrerer Akkumulatorzellen kann eine einfache elektrische Verschaltung der benachbarten Akkumulatorzellen dadurch erreicht werden, dass die Polverbinder Kontakte aufweisen, die aus dem Anreihbereich zweier aneinander gereihter Akkumulatorzellen herausgeführt sind. Die Kontakte lassen sich dann seitlich mittels geeigneter elektrischer Verbindungen aneinander schließen.

Besonders bevorzugt ist es vorgesehen, dass die Gruppen von Akkumulatoren der einen Akkumulatorzelle mit den Gruppen der Akkumulatoren der aneinander gereihten zweiten Akkumulatorzelle miteinander elektrisch in Reihe geschaltet sind. Hierdurch lässt sich kaskadenartig die Spannung erhöhen.

Wenn vorgesehen ist, dass die Pole zumindest eines Teils der Akkumulatoren in einer einheitlichen Anschlussebene ausgerichtet sind, dann können für die elektrische Verbindung der Pole einfache Bauelement eingesetzt werden.

Erfindungsgemäß ist vorgesehen, dass zwei oder mehrere aneinander gereihte Akkumulatorzellen in einem Rohrabschnitt eingesetzt sind, und dass der Rohrabschnitt an seinen stirnseitigen Enden mittels einem Verschlussstück und einem Deckel verschlossen sind. In dem Rohrabschnitt sind die Akkumulatorzellen geschützt untergebracht und von mechanischer Beeinträchtigung geschützt. Zudem kann eine solche Konstruktion einfach abgedichtet werden. Hierzu muss an dem einen Ende des Rohrabschnitts der Deckel und an dem anderen Ende das Verschlussstück mittels geeigneter Dichtungen insbesondere an einem Wandungsabschnitt des Rohrabschnitts gedichtet werden.

Als besonders vorteilhaft hat es sich erwiesen, wenn als Rohrabschnitt ein zylinderförmiges Rohr verwendet ist, dann können Ringdichtungen eingesetzt werden, die eine hohe Dichtigkeit bringen. Die Verwendung eines Rohrabschnitts bringt eine hohe Druckstabilität, so dass sich diese Konstruktion insbesondere beim Einsatz in Wasserfahrzeugen eignet.

Eine einfache Konstruktion ergibt sich erfindungsgemäß für eine solche Akkumulatoreinheit dann, wenn vorgesehen ist, dass das Verschlussstück und der Deckel mittels eines im Innenraum des Rohrabschnitts verlaufenden Spannelements miteinander verbunden sind. Diese Bauweise ermöglicht auch eine einfache Wartung. Hierzu muss lediglich das Spannelement gelöst werden. Dann können der Deckel bzw. das Verschlussstück abgebaut und die Akkumulatorzellen aus dem Rohrabschnitt gezogen werden.

Wenn die Akkumulatoreinheit der Gestalt ist, dass der Deckel zwei von außen zugängliche Pol-anschlüsse aufweist, und dass die Reihe von Akkumulatorzellen im Bereich des Deckels einen Pluspol und einen Minuspol bilden, die mit den Polanschlüssen elektrisch verbunden sind, dann ergibt sich innerhalb der Akkumulatoreinheit ein geringer Verdrahtungsaufwand und die äußere Kontaktierung der Akkumulatoreinheit kann einfach im Bereich eines Endes der Akkumulatoreinheit durchgeführt werden.

Wenn vorgesehen ist, dass der Deckel einen Aufnahmeraum bildet, in dem eine Steuerschaltung für die Akkumulatorzellen angeordnet ist, dann ergibt sich eine vollständig funktionsfähige Akkumulatoreinheit. Die Steuerschaltung ist im geschützten Bereich zwischen dem Rohrabschnitt und dem Deckel untergebracht. Die Steuerschaltung ist dann insbesondere vor mechanischen Beanspruchungen gesichert untergebracht.

Die Erfindung wird im Folgenden anhand eines in den Zeichnungen dargestellten Ausführungsbeispiels näher erläutert. Es zeigen:
- Fig. 1: eine Akkumulatorzelle in Explosionsdarstellung und perspektivischer Ansicht,
- Fig. 2: in perspektivischer Darstellung eine Reihe von Akkumulatorzellen in teilweiser Explosionsdarstellung,
- Fig. 3: die Reihe von Akkumulatorzellen gem. Fig. 2 in Zusammenbaudarstellung,
- Fig. 4: eine Seitenansicht der Reihe von Akkumulatorzellen gem. den Fig. 2 und 3 in Prinzipdarstellung und
- Fig. 5: eine Akkumulatoreinheit in Seitenansicht und im Schnitt.

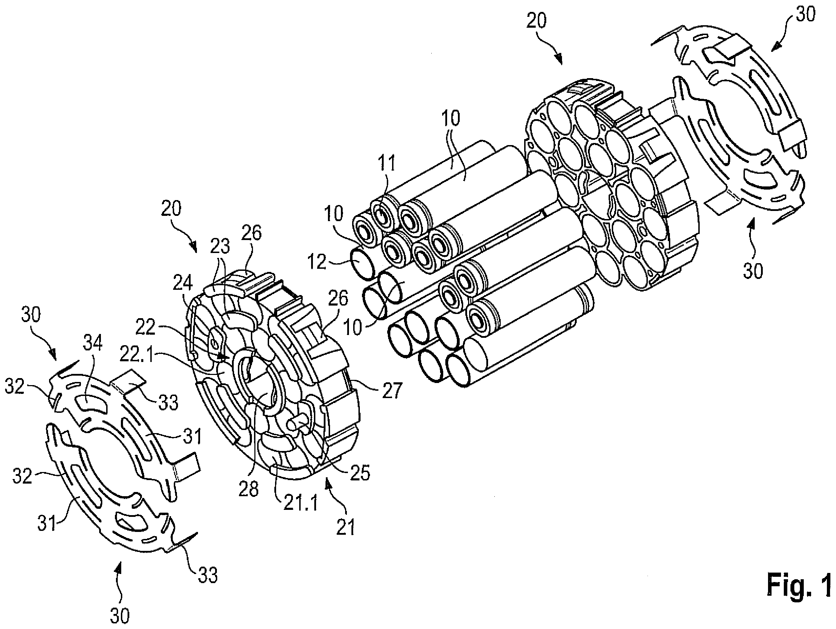

Fig. 1 zeigt eine Akkumulatorzelle Z, die mehrere Akkumulatoren 10 aufweist. Die Akkumulatoren 10 besitzen ein zylindrisches Gehäuse und bilden an ihren gegenüberliegenden Längsseiten einen Pluspol 11 und einen Minuspol 12. Wie Fig. 1 erkennen lässt, sind die Akkumulatoren 10 derart angeordnet, dass zwei Gruppen von Akkumulatoren 10 gebildet sind, wobei neun Akkumulatoren mit dem Pluspol 11 nach links und dem Minuspol nach rechts ausgerichtet sind. Die anderen neun Ackumulatoren 10 sind jeweils um 180° zu der ersten Gruppe von Akkumulatoren 10 verdreht angeordnet. Sie weisen mithin ihren Minuspol 12 linksseitig und ihren Pluspol 11 rechtsseitig auf. Die Akkumulatorzelle Z umfasst zwei Halter 20, die zum Zwecke der Reduzierung des Teileaufwands identisch ausgebildet sind. Jeder Halter 20 weist zwei Aufnahmestrukturen 21, 22 auf, die jeweils mehrere Aufnahmen 21.1 und 22.1 bilden. Dabei sind die Aufnahmen 21.1 und 22.1 auf konzentrischen Ringen des Halters 20 angeordnet. Jeder Ring von Aufnahmen 21.1 bzw. 22.1 bildet eine Aufnahmestruktur 21, 22. Die Aufnahmen 21.1, 22.1 sind als Durchbrüche ausgeführt, wobei die Innenwandungen der Durchbrüche auf die Außenkontur der Akkumulatoren 10 angepasst ausgebildet sind. Damit lassen sich die Akkumulatoren 10 mit ihren polseitigen Enden in die Aufnahmen 21.1, 22.1 einstecken. Die Einsteckbewegung wird mittels angeformten Anschlägen begrenzt. Die Anschläge werden im vorliegenden Ausführungsbeispiel von Distanzstücken 23 gebildet. Im montierten Zustand liegen die Polenden der Akkumulatoren 10 einheitlich ausgerichtet auf einer gemeinsamen Anschlussebene. Nachdem die Akkumulatore 10 in die Aufnahmen 21.1, 22.1 der gegenüberliegenden Halter eingesteckt sind, werden elektrisch leitende Polverbinder 30 mit den Haltern 20 verbaut. Die als Leitbleche ausgebildeten Polverbinder 30 bilden einen Verbindungsabschnitt 31, der zur Kontaktierung der Pole 11, 12 der Akkumulatoren 10 mit Kontaktbereichen 32 ausgestattet ist. Die Polverbinder 30 sind seitlich mit abgekanteten Kontakten 33 ausgebildet, die laschenförmig ausgebildet sind. Der Polverbinder 30 kann außenseitig auf den Halter 20 aufgesetzt werden. Dabei durchfassen die Distanzstücke 23 Durchbrüche 34 der Polverbinder 30, so dass diese leicht ausgerichtet werden können. Die Kontakte 33 ragen in seitliche Kontaktaufnahmen 27 der Halter 20. Zur Verbindung der Polverbinder 30 mit den Akkumulatoren 10 werden Schweißverbindungen im Bereich der Kontaktabschnitte 32 erzeugt, die eine elektrisch leitende Verbindung zwischen den Polen 11, 12 und dem Polverbinder 30 herstellen. Für jede Gruppe von Akkumulatoren 10 sind jeweils zwei Polverbinder 30 vorgesehen, wobei die Polverbinder 30 die Pluspole 11 bzw. die Minuspole 12 der Gruppe von Akkumulatoren zusammenfassen.

In der Fig. 1 ist eine Vollbestückung der Akkumulatorzelle Z dargestellt, d. h. alle Aufnahmen 21.1, 22.1 sind mit Akkumulatoren 10 besetzt. Wenn eine Variation der Energiedichte gewünscht ist, dann lässt sich auch eine Teilbestückung realisieren. Beispielsweise können die Akkumulatoren 10 der den inneren Ring bildenden Aufnahmestruktur 22 entnommen werden.

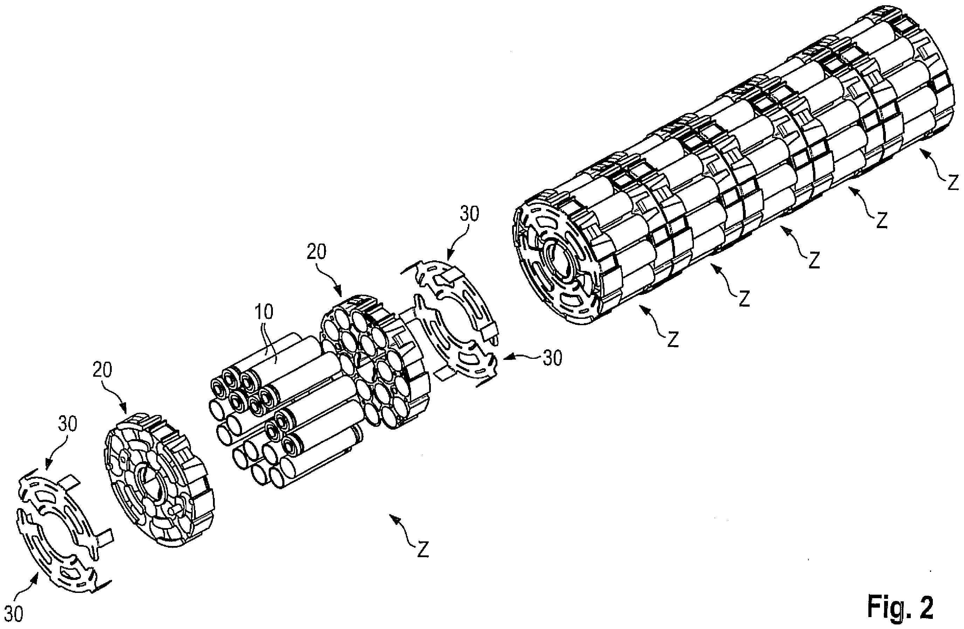

Wie Fig. 2 zeigt, können mehrere baugleiche Akkumulatorzellen Z kaskadenförmig aneinander gereiht werden. Zu diesem Zwecke sind die Halter 20 mit Ausrichtelementen 24, 25 versehen. Im vorliegenden Ausführungsbeispiel sind die Ausrichtelemente 24, 25 als Bohrung (Ausrichtelement 24) und als Zapfen (Ausrichtelement 25) ausgebildet. Dabei ist die Die Geometrie des Zapfens auf die Kontur der Bohrung abgestimmt. Damit greifen die Ausrichtelemente 24, 25 der baugleichen Halter 20 benachbarter Akkumulatorzellen Z ineinander und richten die Akkumulatorzellen exakt gegeneinander aus. Die Ausrichtelemente 24, 25 bilden zudem einen Formschluss in Umfangsrichtung, so dass die Akkumulatorzellen gegeneinander nicht verdreht werden können.

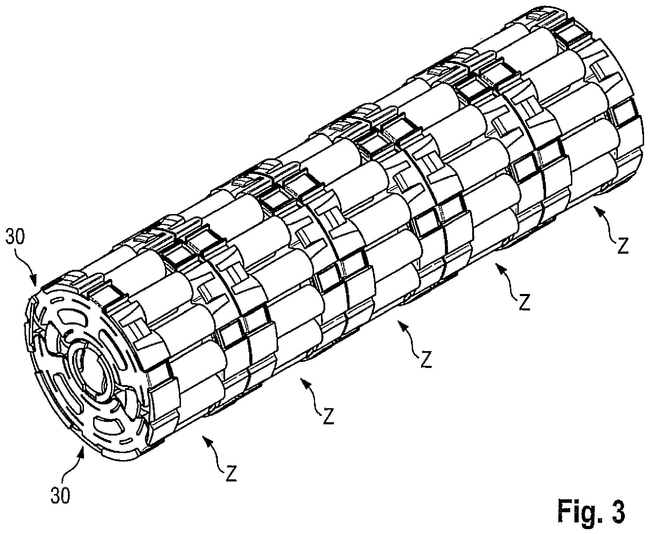

Fig. 3 zeigt die Zusammenbaudarstellung von sechs Akkumulatorzellen Z zu einer kompakten Baueinheit.

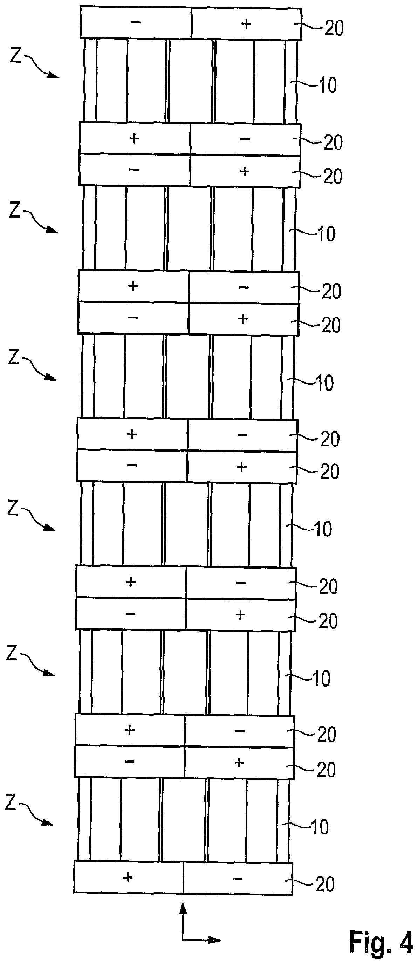

In Fig. 4 ist die Polzuordnung der einzelnen Akkumulatorzellen Z zueinander veranschaulicht. Wie diese Darstellung zeigt, ist bei der oberen Akkumulatorzelle Z die Ausrichtung der ersten Gruppe von Akkumulatoren (neun Akkumulatoren) derart gewählt, dass oben der Minuspol 12 und unten der Pluspol 11 angeordnet ist. Die rechtseitige Gruppe von Akkumulatoren 10 der oberen Akkumulatorzelle Z ist so angeordnet, dass die Pluspole 11 oben und die Minuspole 12 unten angeordnet sind. Die sich an die obere Akkumulatorzelle Z anschließende Akkumulatorzelle Z ist bezüglich ihrer Polstruktur umgekehrt zu der Polstruktur der darüber liegenden Akkumulatorzelle ausgerichtet. Die weiteren Akkumulatorzellen schließen sich entsprechend an, wie dies die Plus- und Minuspolzeichen in Fig. 4 veranschaulichen.

Die untere Akkumulatorzelle bildet untenseitig links den Plus- und rechts den Minuspol. Hier ist ein spezieller Polverbinder vorgesehen, der alle Pole (Pluspole 11 und Minuspole 12) der Akkumulatorzelle Z miteinander verbindet. Auf diese Weise wird ein Stromfluss längs der in Fig. 4 verwendeten Nummerierungsreihenfolge 1 bis 12 erreicht. Es ist also so, dass in jeder Akkumulatorzelle Z zwei Gruppen von parallel geschalteten Akkumulatoren 10 verwendet sind, die eine hohe Leistungsdichte bringen. Aufgrund der Zuordnung der Polstrukturen der einzelnen Akkumulatorzellen Z verzwölfacht sich die Spannung eines Akkumulators 10 in Folge der kaskadierten Serienschaltung. Diese Kaskadenschaltung ermöglicht mithin eine geringe Baugröße für die Akkumulatoreinheit. Besonders vorteilhaft ist es, wenn eine gerade Anzahl von Akkumulatorzellen Z verbaut wird. Dann sind der Pluspol und der Minuspol der Kombination von Akkumulatorzellen im Bereich eines Endes der Baueinheit angeordnet, wie dies obenseitig in Fig. 4 mit dem Plus- und Minuspol symbolisiert ist. Es wird also hier ein einheitlicher Anschlussbereich gebildet.

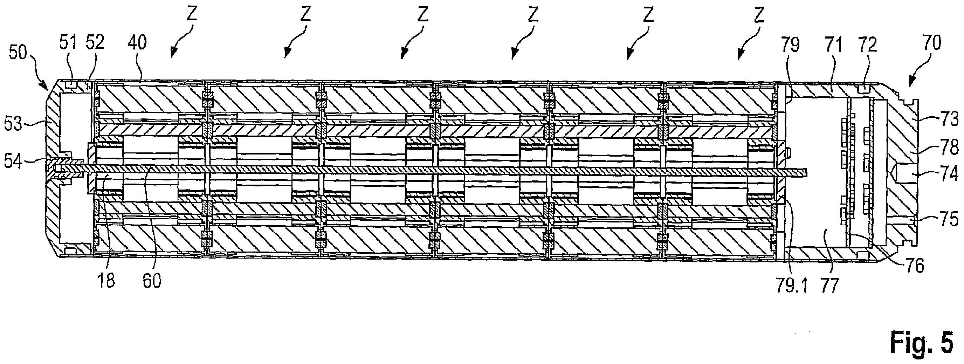

Die in Fig. 3 gezeigte Anordnung kann in einen Rohrabschnitt eingeschoben werden, wie dies Fig. 5 veranschaulicht. Der Rohrabschnitt 40 ist hierbei bevorzugt als dünnwandiges zylindrisches Rohr ausgebildet. Nachdem die Akkumulatorzellen Z in den Rohrabschnitt 40 eingeschoben wurden, kann dieser mit einem Verschlussstück 50 und einem Deckel 70 verschlossen werden. Das Verschlusstück 50 besitzt einen Boden 53 an den einteilig ein Steckansatz 52 angeformt ist. Die Außenkontur des Steckansatzes 52 ist dabei angepasst auf die Innenkontur des Rohrabschnitts 40 ausgelegt. Der Steckansatz 52 ist mit einer umlaufenden Nut 51 ausgerüstet in die eine ebenfalls umlaufende Dichtung, vorzugsweise ein O-Ring eingesetzt werden kann. Diese Dichtung legt sich bei eingesetztem Verschlussstück dichtend an die Innenwandung des Rohrabschnitts 40 an. Der Boden 53 ist zentrisch mit einer Aufnahme versehen, in der ein Gewindestück 54 abgedichtet festgelegt werden kann. Das Gewindestück 54 kann mit einem vorzugsweise als Zuganker ausgebildeten Spannelement 60 verschraubt werden. Das Spannelement 60 ist vorliegend als Gewindestange ausgebildet. Wie die Fig. 5 erkennen lässt, ist das Spannelement 60 durch miteinander fluchtende zentrische Durchführungen 28 der Halter 20 hindurchgesetzt. An dem dem Verschlussstück 50 abgewandten Ende ist das Spannelement 60 mit dem Deckel 70 verbunden. Der Deckel 70 weist wieder einen Boden 78 auf, an den einteilig ein Steckansatz angeformt ist. Die Außenkontur des Steckansatzes 71 ist an die Innenkontur des Rohrabschnitts 40 angepasst ausgebildet. Der Steckansatz 71 ist wieder mit einer Nut 72 versehen in die eine umlaufende Dichtung eingesetzt werden kann. Die Dichtung 72 legt sich dichtend an die Innenwandung des Rohrabschnitts 40 an. Wie Fig. 5 weiter erkennen lässt, umgibt der Steckansatz 71 einen Aufnahmeraum 77. In diesem Aufnahmeraum 77 ist eine Steuerschaltung 76 untergebracht. Diese Steuerschaltung 76 dient zur Steuerung der Kombination von Akkumulatorzellen Z. Auf der dem Boden 78 abgewandten Seite ist der Steckansatz 71 mit einem Haltestück 79 verbunden. Vorzugsweise ist das Haltestück 79 mit dem Steckansatz 71 verschweißt. Das Haltestück 79 bildet zentrisch eine Gewindeaufnahme 79 in die das Spannelement 60 eingeschraubt ist. Durch Anspannen des Gewindestücks 54 können mithin das Verschlussstück 50 und der Deckel 70 miteinander verspannt werden. Die Spannkraft wird dabei über das Spannelement 60 übertragen. Beim Anspannen des Gewindestücks 54 werden sowohl das Verschlussstück 50 als auch der Deckel 70 kontinuierlich mit ihren Steckansätzen 52 und 71 in den Rohrabschnitt 40 eingezogen. Die Einsetzbewegung wird dabei mittels Anschlägen begrenzt, die im Übergangsbereich zwischen den Steckansätzen 52, 71 und den Böden 53, 78 gebildet sind. Im montierten Zustand liegt der Steckansatz 52 des Verschlussstücks 50 endseitig auf der zugeordneten Akkumulatorzelle Z auf. Gegenüberliegend wird verhindert das Haltestück 79 des Deckels 70 den längsseitigen Versatz der zugeordneten Akkumulatorzelle Z. Auf diese Weise ist die Reihe von Ackumulatorzellen gesichert im Rohrabschnitt 40 untergebracht. Die beiden endseitigen Pole der rechten Akkumulatorzellen Z, die durch die Polverbinder 30 gebildet werden, sind über elektrische Leitelemente an Polanschlüsse 73 und 74 angekoppelt. Damit kann außenseitig eine Kontaktierung der in Fig. 5 darstellten Akkumulatoreinheit vorgenommen werden. Die Akkumulatoreinheit besitzt weiterhin einen Diagnoseanschluss 75, der mit der Steuerschaltung 76 in Verbindung steht. Über den Diagnoseanschluss 75 kann die Akkumulatoreinheit vorzugsweise über ein Bussystem an eine Auswertschaltung angeschlossen werden, so dass eine kontinuierliche Überwachung des Betriebszustands möglich wird.

Die Halter 20 sind zum Zwecke der elektrischen Isolierung als Kunststoffteile ausgebildet. Im vorliegenden Ausführungsbeispiel sind die Halter 20 als Kunststoffspritzgussteile ausgestaltet. Sie weisen, wie dies Fig. 1 erkennen lässt, seitliche Spannelemente 26 auf, die beim Einschieben der Akkumulatorzellen Z in den Rohrabschnitt 40 unter Spannwirkung an der Innenwandung des Rohrabschnitts 40 anliegen und so eine seitliche spielfreie Positionierung bieten.

Die einzelnen Akkumulatorzellen Z einer Reihe von Akkumulatorzellen sind mittels geeigneter Verbindungselemente elektrisch miteinander kontaktiert. Hierbei werden die seitlich in den Kontaktaufnahmen 27 der Halter positionierten benachbarten Kontakte der aneinander gereihten Akkumulatorzellen elektrisch miteinander verbunden. Beispielsweise können hier Kabelverbindungen vorgesehen werden. Vorteilhafterweise sind mit den Kontakten 33 starre elektrisch leitfähige Verbinder, beispielsweise Bleche kontaktiert, die mit den Kontakten 33 verschweißt sind. Auf diese Weise wird eine Fixierung der Akkumulatorzellen Z in Längsrichtung erreicht.

## Patentansprüche

1. Wasserfahrzeug mit einer Akkumulatoreinheit mit mehreren Akkumulatoren (10), die über eine Halteranordnung miteinander zu einer Akkumulatorzelle (Z) verbunden sind, wobei zumindest ein Teil der Akkumulatoren (10) im Bereich ihrer Pole (11, 12) mittels eines Polverbinders (30) elektrisch miteinander gekoppelt sind und wobei zwei oder mehrere Akkumulatorzellen (Z) aneinandergereiht und elektrisch miteinander gekoppelt sind,
**dadurch gekennzeichnet,**
**dass** die Halteranordnungen der aneinandergereihten Akkumulatorenzellen (Z) jeweils wenigstens zwei Halter (20) aufweisen, die Aufnahmen (21.1, 22.1) bilden, an denen die Akkumulatoren (10) jeweils im Bereich ihrer Polenden gehalten sind, dass die Aufnahmen (21.1, 22.1) als Steckaufnahmen ausgebildet sind, in denen die Enden der zylindrischen Gehäuse der Akkumulatoren (10) eingesteckt sind, dass zwei oder mehrere aneinander gereihte Akkumulatorzellen (Z) in einen Rohrabschnitt (40) eingesetzt sind,
**dass** der Rohrabschnitt (40) an seinen stirnseitigen Enden mittels eines Verschlussstücks (50) und einem Deckel (70) verschlossen ist und
**dass** das Verschlussstück (50) und der Deckel (70) mittels eines im Innenraum des Rohrabschnittes (40) verlaufenden Spannelements (60) miteinander verbunden sind.

2. Wasserfahrzeug nach Anspruch 1,
**dadurch gekennzeichnet,**
**dass** zumindest zwei Gruppen von Akkumulatoren (10) gebildet sind, die jeweils miteinander mittels der Polverbinder (30) parallel geschalten sind.

3. Wasserfahrzeug nach Anspruch 1 oder 2,
**dadurch gekennzeichnet,**
**dass** der Halter (20) Ausnehmungen oder Durchführungen aufweist, die Zugang zu den Polen (11, 12) der Akkumulatoren (10) schaffen.

4. Wasserfahrzeug nach einem der Ansprüche 1 bis 3,
**dadurch gekennzeichnet,**
**dass** der Halter (20) mit Ausrichtelementen (24, 25) ausgestattet ist, an denen zwei aneinander liegende Halter (20) zweier Akkumulatorzellen (Z) gegeneinander ausgerichtet, insbesondere in eine Richtung formschlüssig gegeneinander gesichert sind.

5. Wasserfahrzeug nach einem der Ansprüche 1 bis 4,
**dadurch gekennzeichnet,**
**dass** die Polverbinder (30) Kontakte (33) aufweisen, die aus dem Anreihbereich zweier aneinandergereihter Akkumulatorzellen (Z) herausgeführt sind.

6. Wasserfahrzeug nach einem der Ansprüche 1 bis 5,
**dadurch gekennzeichnet,**
**dass** die Gruppen von Akkumulatoren (10) der einen Akkumulatorzelle mit den Gruppen der Akkumulatoren der angereihten zweiten Akkumulatorzelle (Z) miteinander elektrisch in Reihe geschalten sind.

7. Wasserfahrzeug nach einem der Ansprüche 1 bis 6,
**dadurch gekennzeichnet,**
**dass** die Pole (11, 12) zumindest eines Teils der Akkumulatoren (10) in einer einheitlichen Anschlussebene ausgerichtet sind.

8. Wasserfahrzeug nach einem der Ansprüche 1 bis 7,
**dadurch gekennzeichnet,**
**dass** der Deckel (70) zwei von außen zugängliche Polanschlüsse (73, 74) aufweist, und
**dass** die Reihe von Akkumulatorzellen (Z) im Bereich des Deckels (70) einen Pluspol (11) und einen Minuspol (12) bildet die mit den Polanschlüssen (73, 74) elektrisch verbunden sind.

9. Wasserfahrzeug nach einem der Ansprüche 1 bis 8,
**dadurch gekennzeichnet,**
**dass** der Deckel (70) einen Aufnahmeraum (77) bildet, in dem eine Steuerschaltung (76) für die Akkumulatorzellen (Z) angeordnet ist.

## Claims

1. A watercraft with a rechargeable battery unit having a plurality of rechargeable batteries (10), which are connected to one another by means of a holder arrangement to form a rechargeable battery cell (Z), wherein at least part of the rechargeable batteries (10) are electrically coupled to each other in the region of their poles (11, 12) by means of a pole connector (30) and wherein two or more rechargeable battery cells (Z) are arranged in series and electrically coupled to each other,
**characterised in that**
the holder arrangements of the rechargeable battery cells (Z) arranged in series each have at least two holders (20) forming receptacles (21.1, 22.1) in which the rechargeable batteries (10) are each held in the region of their pole ends, **in that** the receptacles (21.1, 22.1) are designed as plug-in receptacles in which the ends of the cylindrical housings of the rechargeable batteries (10) are inserted, **in that** two or more accumulator cells (Z) arranged in series are inserted in a pipe section (40),
**in that** the pipe section (40) is closed at its front ends by means of a closure piece (50) and a cover (70) and **in that** the closure piece (50) and the cover (70) are connected to each other by means of a tensioning element (60) running in the interior of the pipe section (40).

2. The watercraft according to claim 1,
**characterised in that**
at least two groups of rechargeable batteries (10) are provided, which are connected in parallel to each other by means of the pole connectors (30).

3. The watercraft according to claim 1 or 2,
**characterised in that**
the holder (20) has recesses or passages that provide access to the poles (11, 12) of the rechargeable batteries (10).

4. The watercraft according to any one of claims 1 to 3,
**characterised in that**
the holder (20) is equipped with alignment elements (24, 25), at which two adjoining holders (20) of two rechargeable battery cells (Z) are aligned in respect to each other, in particular positively secured against each other in one direction.

5. The watercraft according to any one of claims 1 to 4,
**characterised in that**
the pole connectors (30) have contacts (33) which are led out of the joining region of two rechargeable battery cells (Z) arranged in series.

6. The watercraft according to any one of claims 1 to 5,
**characterised in that**
the groups of rechargeable batteries (10) of a first rechargeable battery cell are electrically connected in series with the groups of rechargeable batteries of a second rechargeable battery cell (Z).

7. The watercraft according to any one of claims 1 to 6,
**characterised in that**
the poles (11, 12) of at least part of the rechargeable batteries (10) are aligned in a common connection plane.

8. The watercraft according to any one of claims 1 to 7,
**characterised in that**
the cover (70) has two pole connections (73, 74) accessible from the outside, and the row of rechargeable battery cells (Z) in the region of the cover (70) forms a positive pole (11) and a negative pole (12) which are electrically connected to the pole connections (73, 74).

9. The watercraft according to any one of claims 1 to 8,
**characterised in that**
the cover (70) forms a receiving space (77) in which a control circuit (76) for the rechargeable battery cells (Z) is arranged.

## Revendications

1. Engin nautique ayant un ensemble d'accumulateurs comprenant une pluralité d'accumulateurs (10) qui sont connectés les uns aux autres par un dispositif de maintien pour former une batterie d'accumulateurs (Z), au moins certains des accumulateurs (10) étant couplés électriquement les uns aux autres dans la région de leurs pôles (11, 12) au moyen d'un connecteur de pôles (30) et deux ou plusieurs batteries d'accumulateurs (Z) étant disposées côte à côte et couplées électriquement les unes aux autres,
**caractérisé en ce que**
les dispositifs de maintien des batteries d'accumulateurs (Z) disposées côte à côte ont chacun au moins deux supports (20) qui forment des logements (21.1, 22.1) sur lesquels les accumulateurs (10) sont chacun maintenus dans la région de leurs extrémités polaires, **en ce que** les logements (21.1, 22.1) sont conçus comme des logements enfichables dans lesquels sont insérées les extrémités des boîtiers cylindriques des accumulateurs (10), **en ce que** deux ou plusieurs batteries d'accumulateur (Z) sont disposées côte à côte dans une section tubulaire (40),
**en ce que** la section tubulaire (40) est fermée à ses extrémités avant au moyen d'une pièce de fermeture (50) et d'un couvercle (70) et **en ce que** la pièce de fermeture (50) et le couvercle (70) sont reliés l'un à l'autre au moyen d'un élément de tension (60) s'étendant à l'intérieur de la section tubulaire (40).

2. Engin nautique selon la revendication 1,
**caractérisé en ce que**
au moins deux groupes d'accumulateurs (10) sont formés, chacun étant connecté en parallèle l'un à l'autre au moyen des connecteurs de pôles (30).

3. Engin nautique selon la revendication 1 ou 2,
**caractérisé en ce que**
le support (20) présente des évidements ou des traversées qui donnent accès aux pôles (11, 12) des accumulateurs (10).

4. Engin nautique selon une quelconque des revendications 1 à 3,
**caractérisé en ce que**
le support (20) est équipé d'éléments d'alignement (24, 25) sur lesquels deux supports adjacents (20) de deux batteries d'accumulateurs (Z) sont alignés l'un avec l'autre, en particulier fixés par complémentarité de forme l'un contre l'autre dans une direction.

5. Engin nautique selon une quelconque des revendications 1 à 4,
**caractérisé en ce que**
les connecteurs de pôles (30) présentent des contacts (33) qui sont guidés hors de la zone d'alignement de deux batteries d'accumulateurs (Z) disposées côte à côte.

6. Engin nautique selon une quelconque des revendications 1 à 5,
**caractérisé en ce que**
les groupes d'accumulateurs (10) de la première batterie d'accumulateurs sont connectés électriquement en série les uns avec les autres aux groupes d'accumulateurs de la seconde batterie d'accumulateurs (Z).

7. Engin nautique selon une quelconque des revendications 1 à 6,
**caractérisé en ce que**
les pôles (11, 12) d'au moins certains des accumulateurs (10) sont alignés dans un niveau de connexion uniforme.

8. Engin nautique selon une quelconque des revendications 1 à 7,
**caractérisé en ce que**
le couvercle (70) présente deux bornes polaires (73, 74) accessibles de l'extérieur et **en ce que** la rangée de batteries d'accumulateurs (Z) dans la zone du couvercle (70) forme un pôle positif (11) et un pôle négatif (12) qui sont connectés électriquement aux bornes polaires (73, 74).

9. Engin nautique selon une quelconque des revendications 1 à 8,
**caractérisé en ce que**
le couvercle (70) forme un espace de réception (77) dans lequel est disposé un circuit de commande (76) pour les batteries d'accumulateurs (Z).
